# EUROPÄISCHE PATENTSCHRIFT

(11) **EP 3 964 725 B1**
(45) Veröffentlichungstag und Bekanntmachung des Hinweises auf die Patenterteilung: **19.03.2025**
(21) Anmeldenummer: 21191898.2
(22) Anmeldetag: 18.08.2021
(51) Int. Cl.: F16C 43/06, F16C 19/38, F16C 19/40, F16C 33/37, F16C 33/50, F16C 33/46

(54) **VERFAHREN ZUM ZUSAMMENBAU EINES KEGELROLLENLAGERS UND MONTAGEEINHEIT DAFÜR**
METHOD FOR ASSEMBLY OF A ROLLER BEARING AND ASSEMBLY UNIT FOR SAME
PROCÉDÉ D'ASSEMBLAGE D'UN ROULEMENT ET UNITÉ DE MONTAGE CORRESPONDANT

(30) Priorität: 02.09.2020 DE 102020211035
(43) Veröffentlichungstag der Anmeldung: 09.03.2022
(73) Patentinhaber: Aktiebolaget SKF, 415 50 Göteborg (SE)
(72) Erfinder: Reugels, Michael, 97478 Knetzgau (DE); Fritz, Dominik, 97074 Würzburg (DE); Fritze, Denny, 97422 Schweinfurt (DE)
(74) Vertreter: Kohl, Thomas

(56) Entgegenhaltungen:
- WO-A1-2019/156720
- JP-A- 2013 024 377
- JP-A- 2017 166 614
- US-A1- 2016 319 869

## Beschreibung

Die Erfindung betrifft ein Verfahren zum Zusammenbau eines Kegelrollenlagers und eine Montageeinheit dafür.

Der Zusammenbau eines Kegelrollenlagers als solches und/oder beim Einbau in die Einbauumgebung des Kegelrollenlagers erfordert insbesondere bei größeren und/oder speziell ausgebildeten Kegelrollenlagern eine dezidierte Vorgehensweise und/oder Vorkehrungen. Ein gattungsgemäßer Einbau eines Kegelrollenlagers ist Beispielweise in JP2017166614A offenbart.

Eine Aufgabe der vorliegenden Erfindung ist es daher, ein verbessertes Verfahren zum Zusammenbau eines Kegelrollenlagers und dafür eine verbesserte Montageeinheit zu schaffen.

Die Aufgabe wird durch die Gegenstände der unabhängigen Patentansprüche gelöst. Vorteilhafte Ausgestaltungen sind in den Unteransprüchen beschrieben. Die Montageeinheit weist ein erstes Abrollflächenelement mit einem Bord, Kegelrollen, die auf dem ersten Abrollflächenelement angeordnet und durch den Bord gestützt sind, und eine Montagehilfe auf. Für den Zusammenbau wird das erste Abrollflächenelement, das beispielweise ein Innenring sein kann, auf eine Stirnseite gestellt. Die Kegelrollen werden auf das erste Abrollflächenelement gelegt, wobei sie mit ihrer Stirnfläche auf dem Bord aufliegen. Der Bord dient während des Zusammenbaus dazu, die Kegelrollen zu halten, so dass diese nicht von dem ersten Abrollflächenelement rutschen können.

Insbesondere wenn ein Segmentkäfig für die Rollen oder die zwischen den Rollen angeordneten Rollenabstandshalter frei von einer Ausbildung sind, die die Montageeinheit bei einer in Wesentlichen vertikal ausgerichteten Hauptachse des Abrollflächenelements in sich zusammenhält, könnten die Kegelrollen aufgrund der Schwerkraft von dem ersten Abrollflächenelement wegkippen. Um das Kegelrollenlager zusammenbauen zu können, ohne dass die Kegelrollen wegkippen, ist die Montagehilfe dazu ausgebildet, die Kegelrollen an einem Endbereich der Kegelrollen zu berühren und die Kegelrollen ringartig zu umschließen, so dass die Montageeinheit bis zu einem Zusammenbau des Kegelrollenlagers in sich zusammenhält. Die Montagehilfe hält somit die Kegelrollen an dem ersten Abrollflächenelement und wirkt der Schwerkraft entgegen, so dass die Kegelrollen nicht herauskippen. Die Montagehilfe ist des Weiteren dazu ausgebildet, beim Zusammenbau der Montageeinheit mit einem zweiten Abrollflächenelement für die Kegelrollen abgestreift zu werden. Das zweite Abrollflächenelement kann beispielsweise ein Gehäuse oder ein Außenring sein. Auf diese Weise kann die Montagehilfe auf einfache Weise entfernt werden. Im zusammengebauten Zustand weist das Kegelrollenlager dann wie üblich das erste Abrollflächenelement und das zweite Abrollflächenelement mit dazwischen angeordneten Kegelrollen auf.

Gemäß einer Ausführungsform ist die Montagehilfe derart angeordnet, dass sie die Kegelrollen im Übergangsbereich von Kegelrollenmantel zur Kegelrollenstirnseite berührt. Insbesondere berührt die Montagehilfe die Kegelrollen an der Kegelrollenstirnseite, an der die Kegelrollen auf dem Bord aufliegen. Hier kann die Montagehilfe besonders einfach durch das zweite Abrollflächenelement abgestreift werden. Gleichzeitig wirkt die Montagehilfe an dieser Stelle der Schwerkraft, die ein Herauskippen der Kegelrollen zur Folge haben kann, entgegen.

Gemäß einer weiteren Ausführungsform weist die Montagehilfe einen inneren Ring und einen äußeren Ring auf, wobei der innere Ring die Kegelrollen berührt und insbesondere in sich nicht geschlossen ausgebildet ist, und wobei der äußere Ring um den inneren Ring angeordnet ist und dazu ausgebildet ist, den inneren Ring zu schließen. Da der innere Ring nicht geschlossen ausgebildet ist, kann er auf einfache Weise um die Kegelrollen gelegt bzw. geschnappt werden.

Gemäß einer weiteren Ausführungsform ist der innere Ring aus einem Material gebildet, das dazu ausgebildet ist, die Kegelrollenoberflächen zu schonen, und eine erforderliche Weichheit aufweist. Das Material kann beispielsweise Gummi, Kunststoffe oder dergleichen aufweisen. Dies stellt sicher, dass die Kegelrollenoberflächen während des Zusammenbaus nicht beschädigt werden.

Der äußere Ring kann aus einem Material gebildet sein, das eine mechanische Festigkeit und Haltekräfte bereitstellt. Beispielsweise kann der äußere Ring als PET-Packband oder dergleichen ausgebildet sein. Ein solches PET-Band ist stabil, und stellt während des Zusammenbaus sicher, dass der innere Ring an den Kegelrollen verbleibt und diese an dem inneren Abrollflächenelement hält. Nach dem Zusammenbau, wenn die Montagehilfe abgestreift ist, kann das PET-Band einfach durchgeschnitten und entfernt werden, wodurch sich auch der innere Ring der Montagehilfe, der in sich nicht geschlossen ist, entfernen lässt.

Gemäß einer weiteren Ausführungsform weist die Montageeinheit einen Käfig, insbesondere einen segmentierten Käfig, auf, der dazu ausgebildet ist, die Kegelrollen zu führen und ein gegenseitiges Berühren der Rollen zu verhindern.

Die Verwendung eines solchen segmentierten Käfigs stellt Vorteile hinsichtlich des Gewichts dar, allerdings werden die Kegelrollen nicht durch den Käfig auf dem Abrollflächenelement gehalten, was jedoch durch die hier beschriebene Montagehilfe geleistet wird.

Der Käfig kann insbesondere aus einem Kunststoff, insbesondere PEEK, ausgebildet sein. Ein solcher Kunststoffkäfig stellt einen leichten, aber dennoch stabilen Käfig bereit. Zusätzlich kann der Segmentkäfig faserverstärkt sein, wobei die Fasern insbesondere Glasfasern, Carbonfasern oder dergleichen aufweisen. Auf diese Weise wird der Segmentkäfig weiter verstärkt.

Gemäß einer weiteren Ausführungsform weist der segmentierte Käfig mehrere in Umfangsrichtung verteilt angeordnete Käfigsegmente zur Aufnahme von genau einer Kegelrolle oder mehreren Kegelrollen auf, wobei insbesondere bei Käfigsegmenten für genau eine Kegelrolle sich Kegelrollen mit einem derartigen Käfigsegment und nicht in einem Käfigsegment angeordnete Kegelrollen in Umfangsrichtung abwechselnd angeordnet sind. Alternativ kann auch jede Kegelrolle mit einem derartigen Käfigsegment versehen sein oder eine Kombination des obigen ist möglich. Diese Käfigsegmente haben den Vorteil, dass Gewicht gespart wird, da nicht jede Kegelrolle mit einem Käfigsegment versehen ist. Zwar ist dies bei der Montage nachteilig, da die Kegelrollen nicht durch den Käfig an dem ersten Abrollflächenelement gehalten werden, dies wird jedoch durch die hier vorgeschlagene Montageeinheit mit der Montagehilfe behoben.

Gemäß einer weiteren Ausführungsform bildet das Kegelrollenlager wenigstens einen Teil einer Hauptwellenlagerung einer Windkraftanlage, insbesondere einer Windkraftanlage im Megawattbereich. Die Hauptwellenlagerung kann ein weiteres dazu entsprechend angestelltes Kegelrollenlager in O-Anordnung oder X-Anordnung aufweisen.

Gemäß einer weiteren Ausführungsform ist der Innendurchmesser des Kegelrollenlagers größer als 0,5 m, insbesondere größer als 1 m. Gerade bei solch großen Lagern ist es vorteilhaft, Käfigsegmente, wie sie oben beschrieben sind, zu verwenden, da hierdurch Gewicht gespart werden kann.

Durch die oben beschriebene Montagehilfe ist es möglich, das Kegelrollenlager sicher in der Windkraftanlage zu montieren. Beispielsweise kann das erste Abrollflächenelement, das ein Innenring sein kann, auf eine Nabe der Hauptwellenlagerung aufgeschoben werden. Das zweite Abrollflächenelement kann ein Gehäuse der Hauptwellenlagerung bilden.

Gemäß einem weiteren Aspekt wird ein Verfahren zum Zusammenbau eines Kegelrollenlagers unter Verwendung einer Montageeinheit, wie sie oben beschrieben ist, vorgeschlagen. Das Verfahren weist die folgenden Schritte auf:
- Bereitstellen der Montageeinheit nach einem der vorhergehenden Ansprüche,
- Aufschieben des ersten Abrollflächenelements der Montageeinheit, bestehend aus erstem Abrollflächenelement, Kegelrollen und Montagehilfe, auf eine Welle oder Nabe,
- Aufschieben eines zweiten Abrollflächenelements auf die Kegelrollen, und
- Abstreifen der Montagehilfe durch das zweite Abrollflächenelement.

Die oben in Bezug auf die Montageeinheit beschriebenen Merkmale und Vorteile gelten für das Verfahren entsprechend, und andersherum.

Gemäß einer weiteren Ausführungsform weist das Verfahren zusätzlich die weiteren Schritte auf: Durchtrennen zumindest eines Teils der Montagehilfe, und Entfernen der Montagehilfe.

Beispielsweise kann die Montagehilfe, oder zumindest ein Teil, beispielsweise der äußere Ring, mittels eines Schneidwerkzeugs oder ähnlichen durchtrennt und anschließend von der Montageeinheit entfernt werden.

Gemäß der Erfindung erfolgt das Aufschieben des ersten und des zweiten Abrollflächenelements in vertikaler Richtung bei entsprechend stirnseitig aufgestellter Montageeinheit. Das bedeutet, dass die Kegelrollen auf dem Bord aufliegen und dieses in vertikaler Richtung unten angeordnet ist. Das zweite Abrollflächenelement wird dann in vertikaler Richtung von oben her auf die stirnseitig aufgestellte Montageeinheit aufgebracht.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine perspektivische Schnittansicht einer Montageeinheit mit einem Abrollflächenelement für Kegelrollen eines Kegelrollenlagers;
Fig. 2: eine perspektivische Ansicht eines ersten Abrollflächenelement eines Kegelrollenlagers mit Kegelrollen;
Fig. 3: eine perspektivische Schnittansicht eines Kegelrollenlagers in einem ersten Zusammenbauschritt;
Fig. 4: eine Schnittansicht des Kegelrollenlagers in einem zweiten Zusammenbauschritt; und
Fig. 5: eine perspektivische Schnittansicht des Kegelrollenlagers in einem dritten Zusammenbauschritt.

Im Folgenden werden gleiche oder funktionell gleichwirkende Elemente mit denselben Bezugszeichen gekennzeichnet.

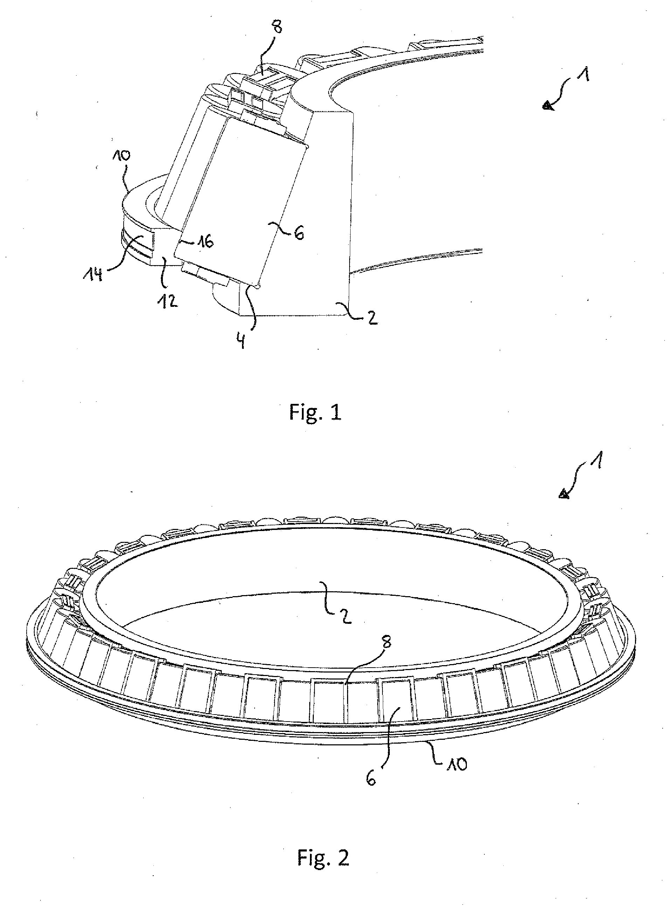

Fig. 1 zeigt eine Montageeinheit 1 mit einem ersten Abrollflächenelement 2. Das Abrollflächenelement 2 kann beispielsweise ein Innenring eines Kegelrollenlagers sein. Das erste Abrollflächenelement 2 weist einen Bord 4 auf, auf dem Kegelrollen 6 abgestützt werden. Die Kegelrollen 6 liegen mit ihrem Mantel an dem ersten Abrollflächenelement 2 und mit ihrer Stirnseite an dem Bord 4 an.

Die Kegelrollen 6 können mit Käfigsegmenten 8 versehen sein. Wie hier gezeigt ist, wird jede zweite Kegelrolle 6 in einem solchen Käfigsegment 8 aufgenommen und jede zweite Kegelrolle 6 ist frei von einem solchen Käfigsegment 8.

Um den Zusammenbau des Kegelrollenlagers zu vereinfachen und um sicherzustellen, dass die Kegelrollen 6 während des Zusammenbaus nicht aus der Montageeinheit 1 herauskippen, ist eine Montagehilfe 10 vorgesehen. Diese Montagehilfe 10 weist einen inneren Ring 12 und einen äußeren Ring 14 auf. Der innere Ring 12 weist eine Kontaktfläche 16 auf, die die Kegelrollen 6 an einem Übergangsbereich zwischen der Mantelfläche und der Stirnfläche kontaktiert. Der innere Ring 12 ist vorzugsweise nicht geschlossen, sodass er einfach um die Kegelrollen 6 herum angeordnet werden kann.

Um den inneren Ring 12 zu schließen und an den Kegelrollen 6 zu fixieren, wird der äußere Ring 14 um den inneren Ring 12 gelegt. Der äußere Ring 14 kann beispielsweise ein PET-Band sein, welches stabil ist und einfach um den inneren Ring 12 gelegt werden kann. Sobald die Montagehilfe 10 angebracht ist, wird durch diese eine Gegenkraft auf die Rollen ausgeübt, damit diese während des Zusammenbaus nicht herausfallen.

Wie in Fig. 2 gezeigt ist, besteht die Montageeinheit 1 nach Anbringen der Montagehilfe 10 aus dem ersten Abrollflächenelement 2, auf dem ersten Abrollflächenelement 2 angeordneten Kegelrollen 6, die zumindest zum Teil in Käfigsegmenten 8 aufgenommen sind, und der Montagehilfe 10, die um die Kegelrollen 6 gelegt ist.

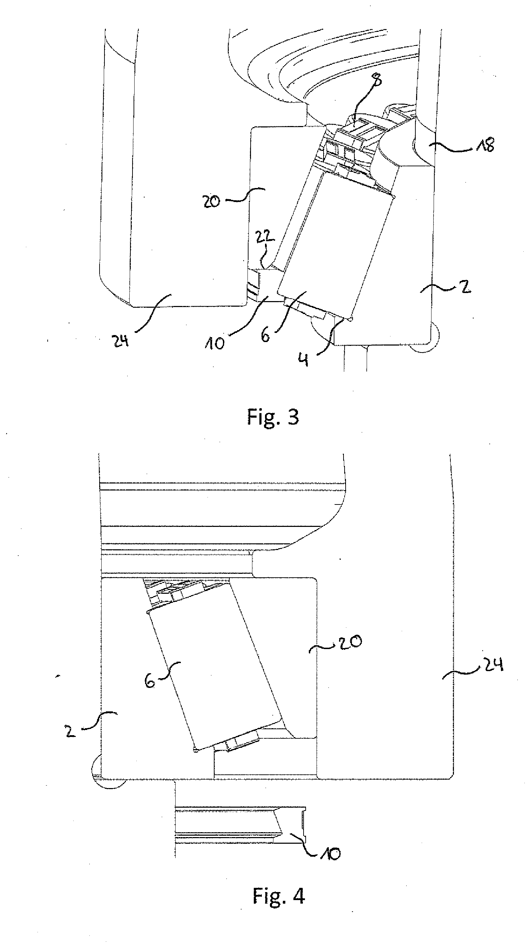

Fig. 3 zeigt einen 1. Zusammenbauschritt des Kegelrollenlagers. Hierbei wird zunächst das erste Abrollflächenelement 2 auf eine Welle 18 aufgezogen. Hierzu wird das erste Abrollflächenelement 2 erwärmt und anschließend auf die Welle aufgeschoben. Anschließend wird ein zweites Abrollflächenelement 20 um die Kegelrollen 6 angeordnet. Eine Kontaktfläche 22 des zweiten Abrollflächenelements 20 liegt dabei an der Montagehilfe 10 an bzw. stößt an der Kontaktfläche 22 auf diese. Das zweite Abrollflächenelement 20 kann beispielsweise ein Außenring sein, der in einem Gehäuse 24 montiert ist oder kann direkter Bestandteil des Gehäuses 24 sein.

In einem zweiten Zusammenbauschritt des Kegelrollenlagers, wie er in Fig. 4 gezeigt ist, ist das zweite Abrollflächenelement 20 komplett auf die Kegelrollen 6 aufgeschoben. Die Montagehilfe 10 wurde dabei durch das zweite Abrollflächenelement 20 von den Kegelrollen heruntergeschoben. Um nun die Montagehilfe 10 zu entfernen, wird der äußere Ring 14 zunächst entfernt, beispielsweise durchgeschnitten.

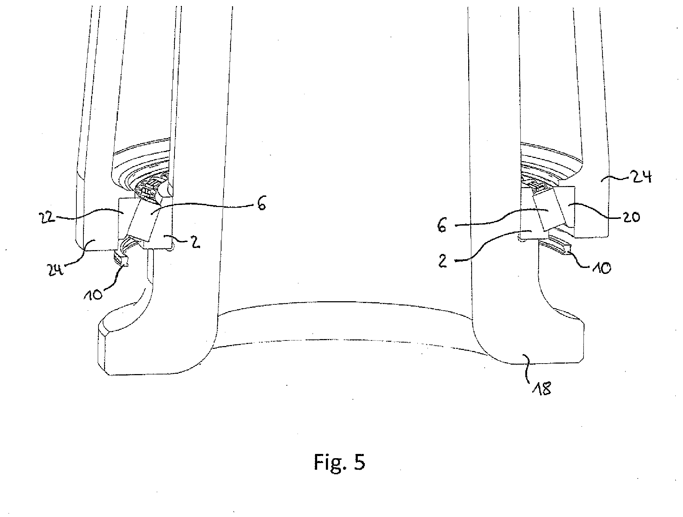

Wie in Fig. 5 gezeigt ist, öffnet sich bei diesem Zusammenbauschritt der innere Ring 12 nach dem Entfernen bzw. Aufschneiden des äußeren Rings 14 und die Montagehilfe kann somit auf einfache Weise von dem Kegelrollenlager entfernt werden.

Durch die hier beschriebene Montageeinheit bzw. das Zusammenbauverfahren ist es möglich, ein Kegelrollenlager auf einfache Weise zusammenzubauen, ohne dass die Kegelrollen während des Zusammenbaus Gefahr laufen herauszukippen. Dies ist besonders vorteilhaft bei Kegelrollenlagern, bei denen der Schwerpunkt der Kegelrollen radial außerhalb des Bords des Kegelrollenlagerinnenrings liegt, da die Kegelrollen ohne die verwendete Montagehilfe aus dem Kegelrollenlagering allein aufgrund der Schwerkraft herausfallen würden.

## Patentansprüche

1. Verfahren zum Zusammenbau eines Kegelrollenlagers, bei dem eine Montageeinheit (1), die ein erstes Abrollflächenelement (2) für Kegelrollen (6) des Kegelrollenlagers, auf dem Abrollflächenelement (2) in einem Segmentkäfig oder zwischen Rollenabstandshalter angeordnete Kegelrollen (6) und eine Montagehilfe (10) umfasst, mit einem zweiten Abrollflächenelement (20) für die Kegelrollen (6) in einer im Wesentlichen vertikalen Richtung bei stirnseitig aufgestellter Montageeinheit (1) derart zusammengebracht wird, dass mit dem Zusammenbringen die Montagehilfe (10) abgestreift wird, wobei die Montagehilfe (10) am durchmessergroßen Endbereich der Kegelrollen (6) die Kegelrollen berührend, die Kegelrollen ringartig umschließend derart ausgebildet ist, dass die Montageeinheit (1) bis zum Zusammenbau in sich zusammenhält.

2. Verfahren nach Anspruch 1, wobei nach dem Zusammenbringen die abgestreifte Montagehilfe durchtrennt und entfernt wird.

3. Verfahren nach einem der Ansprüche 1 oder 2, wobei sich die Rollen am axialen Ende, an dem Montagehilfe (10) angeordnet ist, auf einen am Abrollflächenelement (2) ausgebildeten Bord abstützen.

4. Verfahren nach einem der Ansprüche 1 bis 3, wobei die Montagehilfe die Kegelrollen im Übergangsbereich von Kegelrollenmantel zur Kegelrollenstirnseite berührend ausgebildet ist und/oder wobei die Montagehilfe im die Kegelrollen berührenden Innenbereich einen inneren Ring umfasst, der insbesondere in sich nicht geschlossen ausgebildet ist, und der aus einem die Kegelrollenoberflächen schonenden Material erforderlicher Weichheit, beispielsweise umfassend Gummi, Kunststoffe und dergleichen, ausgebildet ist, und im Außenbereich einen äußeren Ring umfasst, der aus einem die notwenige mechanische Festigkeit und Haltekräfte ermöglichenden Material, beispielsweise in der Ausbildung als PET Packband oder dergleichen, ausgebildet ist.

5. Verfahren nach einem der Ansprüche 1 bis 4, wobei der Segmentkäfig oder die Rollenabstandshalter aus einem Kunststoff, insbesondere PEEK und faserverstärkt ausgebildet ist, wobei die Fasern insbesondere Glasfasern, Carbonfasern oder dergleichen umfassen, der Segmentkäfig oder die Rollenabstandshalter frei von einer Ausbildung sind, die die Montageeinheit bei einer in Wesentlichen vertikal ausgerichteten Hauptachse des Abrollflächenelements in sich zusammenhält, und/oder wobei der Segmentkäfig mehrere in Umfangsrichtung verteilt angeordnete Käfigsegmente zur Aufnahme von genau einer Kegelrolle oder mehreren Kegelrollen umfasst, wobei insbesondere bei Käfigsegmenten für genau eine Kegelrolle sich Kegelrollen mit einem derartigen Käfigsegment und nicht in einem Käfigsegment angeordnete Kegelrollen sich in Umfangsrichtung abwechselnd angeordnet sind, aber auch jede Kegelrolle mit einem derartigen Käfigsegment versehen sein kann oder jedwede diesbezügliche Mischlösung.

6. Verfahren nach einem der Ansprüche 1 bis 5, wobei das Kegelrollenlager wenigstens einen Teil einer Hauptwellenlagerung einer Windkraftanlage bildet, insbesondere einer Windkraftanlage im Megawattbereich, die Hauptwellenlagerung ein weiteres dazu entsprechend angestelltes Kegelrollenlager in O-Anordnung, oder auch X-Anordnung umfasst, und/oder der Innendurchmesser des Kegelrollenlagers größer 0,5 m, insbesondere größer 1 m ist.

7. Montageeinheit (1), die ein erstes Abrollflächenelement (2) für Kegelrollen (6) eines Kegelrollenlagers, auf dem Abrollflächenelement (2) in einem Segmentkäfig oder zwischen Rollenabstandshalter angeordnet Kegelrollen (6) und eine Montagehilfe (10) umfasst, wobei der Segmentkäfig oder die Rollenabstandshalter frei von einer Ausbildung sind, die die Montageeinheit bei einer in Wesentlichen vertikal ausgerichteten Hauptachse des Abrollflächenelements (2) in sich zusammenhält, wobei die Montagehilfe am durchmessergroßen Endbereich der Kegelrollen (6) die Kegelrollen berührend, die Kegelrollen ringartig umschließend derart ausgebildet ist, dass die Montageeinheit bis zu einem Zusammenbau des Kegelrollenlagers in sich zusammenhält, und dass beim Zusammenbau der Montageeinheit (1) mit einem zweiten Abrollflächenelement (2) für die Kegelrollen (6) dieses die Montagehilfe (10) bei stirnseitig aufgestellter Montageeinheit (1) abstreift.

8. Einheit nach Anspruch 7, wobei die Montagehilfe die Kegelrollen im Übergangsbereich von Kegelrollenmantel zur Kegelrollenstirnseite berührend ausgebildet ist und/oder wobei die Montagehilfe im die Kegelrollen berührenden Innenbereich einen inneren Ring umfasst, der insbesondere in sich nicht geschlossen ausgebildet ist, und der aus einem die Kegelrollenoberflächen schonenden Material erforderlicher Weichheit, beispielsweise umfassend Gummi, Kunststoffe und dergleichen, ausgebildet ist, und im Außenbereich einen äußeren Ring umfasst, der aus einem die notwenige mechanische Festigkeit und Haltekräfte ermöglichenden Material, beispielsweise in der Ausbildung als PET Packband oder dergleichen, ausgebildet ist.

9. Einheit nach einem der Ansprüche 7 oder 8, wobei der Segmentkäfig oder die Rollenabstandhalter aus einem Kunststoff, insbesondere PEEK und faserverstärkt ausgebildet ist, wobei die Fasern insbesondere Glasfasern, Carbonfasern oder dergleichen umfassen, und/oder wobei der Segmentkäfig mehrere in Umfangsrichtung verteilt angeordnete Käfigsegmente zur Aufnahme von genau einer Kegelrolle oder mehreren Kegelrollen umfasst, wobei insbesondere bei Käfigsegmenten für genau eine Kegelrolle sich Kegelrollen mit einem derartigen Käfigsegment und nicht in einem Käfigsegment angeordnete Kegelrollen sich in Umfangsrichtung abwechselnd angeordnet sind, aber auch jede Kegelrolle mit einem derartigen Käfigsegment versehen sein kann oder jedwede diesbezügliche Mischlösung.

10. Einheit nach einem der Ansprüche 7 bis 9, wobei das Kegelrollenlager wenigstens einen Teil einer Hauptwellenlagerung einer Windkraftanlage bildet, insbesondere einer Windkraftanlage im Megawattbereich, die Hauptwellenlagerung ein weiteres dazu entsprechend angestelltes Kegelrollenlager in O-Anordnung, oder auch X-Anordnung umfasst, und/oder der Innendurchmesser des Kegelrollenlagers größer 0,5 m, insbesondere größer 1 m ist.

## Claims

1. Method for assembling a tapered roller bearing, in which a mounting unit (1), which comprises a first rolling surface element (2) for tapered rollers (6) of the tapered roller bearing, tapered rollers (6) arranged on the rolling surface element (2) in a segment cage or between roller spacers, and a mounting aid (10), is brought together with a second rolling surface element (20) for the tapered rollers (6) in a substantially vertical direction, with the assembly unit (1) positioned on the end face, in such a way that, when brought together, the mounting aid (10) is stripped off, wherein the mounting aid (10) is designed so as to be in contact with the tapered rollers at the large-diameter end region of the tapered rollers (6) and so as to annularly enclose the tapered rollers, in such a way that the mounting unit (1) holds them together until they are assembled.

2. Method according to Claim 1, wherein, after being brought together, the stripped-off mounting aid is severed and removed.

3. Method according to either of Claims 1 and 2, wherein the rollers at the axial end, at which the mounting aid (10) is arranged, are supported on a flange formed on the rolling surface element (2).

4. Method according to any one of Claims 1 to 3, wherein the mounting aid is formed in contact with the tapered rollers in the transition region from the tapered roller jacket to the tapered roller end face and/or wherein the mounting aid in the inner region in contact with the tapered rollers comprises an inner ring, which in particular is not closed in itself and which is formed from a material of a required softness protecting the tapered roller surfaces, for example comprising rubber, plastics and the like, and in the outer region comprises an outer ring, which is formed from a material enabling the necessary mechanical strength and holding forces, for example in the form of a PET packing tape or the like.

5. Method according to any one of Claims 1 to 4, wherein the segment cage or the roller spacers are formed from a plastic, in particular PEEK and with fibre reinforcement, wherein the fibres comprise in particular glass fibres, carbon fibres or the like, the segment cage or the roller spacers are free of a configuration which holds the mounting unit together in a substantially vertically aligned main axis of the rolling surface element, and/or wherein the segment cage comprises a plurality of cage segments distributed in the circumferential direction for receiving precisely one tapered roller or a plurality of tapered rollers, wherein in particular in the case of cage segments for precisely one tapered roller, tapered rollers having such a cage segment and tapered rollers not arranged in a cage segment are alternately arranged in the circumferential direction, but each tapered roller may also be provided with such a cage segment, or any related mixed solution.

6. Method according to any one of Claims 1 to 5, wherein the tapered roller bearing forms at least a part of a main shaft bearing of a wind turbine, in particular a wind turbine in the megawatt range, the main shaft bearing comprises a further correspondingly positioned tapered roller bearing in an O arrangement, or else an X arrangement, and/or the inner diameter of the tapered roller bearing is greater than 0.5 m, in particular greater than 1 m.

7. Mounting unit (1) which comprises a first rolling surface element (2) for tapered rollers (6) of a tapered roller bearing, tapered rollers (6) arranged on the rolling surface element (2) in a segment cage or between roller spacers, and a mounting aid (10), wherein the segment cage or the roller spacers are free of a configuration which holds the mounting unit together in a substantially vertically aligned main axis of the rolling surface element (2), wherein the mounting aid is designed so as to be in contact with the tapered rollers at the large-diameter end region of the tapered rollers (6) and so as to annularly enclose the tapered rollers, in such a way that the mounting unit holds them together until the tapered roller bearing is assembled, and in that, when the mounting unit (1) is assembled together with a second rolling surface element (2) for the tapered rollers (6), said rolling surface element strips off the mounting aid (10) with the mounting unit (1) positioned on the end face.

8. Unit according to Claim 7, wherein the mounting aid is formed in contact with the tapered rollers in the transition region from the tapered roller jacket to the tapered roller end face and/or wherein the mounting aid in the inner region in contact with the tapered rollers comprises an inner ring, which in particular is not closed in itself and which is formed from a material of a required softness protecting the tapered roller surfaces, for example comprising rubber, plastics and the like, and in the outer region comprises an outer ring, which is formed from a material enabling the necessary mechanical strength and holding forces, for example in the form of a PET packing tape or the like.

9. Unit according to either of Claims 7 and 8, wherein the segment cage or the roller spacers are formed from a plastic, in particular PEEK and with fibre reinforcement, wherein the fibres comprise in particular glass fibres, carbon fibres or the like, and/or wherein the segment cage comprises a plurality of cage segments distributed in the circumferential direction for receiving precisely one tapered roller or a plurality of tapered rollers, wherein in particular in the case of cage segments for precisely one tapered roller, tapered rollers having such a cage segment and tapered rollers not arranged in a cage segment are alternately arranged in the circumferential direction, but each tapered roller may also be provided with such a cage segment, or any related mixed solution.

10. Unit according to any one of Claims 7 to 9, wherein the tapered roller bearing forms at least a part of a main shaft bearing of a wind turbine, in particular a wind turbine in the megawatt range, the main shaft bearing comprises a further correspondingly positioned tapered roller bearing in an O arrangement, or else an X arrangement, and/or the inner diameter of the tapered roller bearing is greater than 0.5 m, in particular greater than 1 m.

## Revendications

1. Procédé d'assemblage d'un roulement à rouleaux coniques, dans lequel une unité de montage (1) comprend un premier élément (2) à surface de roulement pour des rouleaux coniques (6) du roulement à rouleaux coniques, des rouleaux coniques (6) étant agencés sur l'élément (2) à surface de roulement, dans une cage à segments ou entre des entretoises de rouleaux, et une pièce auxiliaire de montage (10), avec un deuxième élément (20) à surface de roulement pour les rouleaux coniques (6) qui est réuni avec une unité de montage (1) mise en place, selon une direction essentiellement verticale, sur le côté frontal, de telle sorte que la pièce (10) d'aide au montage soit démontée lors de l'assemblage, la pièce (10) d'aide au montage étant réalisée au niveau de la zone d'extrémité de grand diamètre des rouleaux coniques (6) de façon à être en contact avec les rouleaux coniques, les rouleaux coniques étant conçus de manière à être entourés de façon annulaire, de telle sorte que l'unité de montage (1) soit maintenue assemblée jusqu'à l'assemblage.

2. Procédé selon la revendication 1, dans lequel, après l'assemblage, la pièce d'aide au montage démontée est sectionnée et retirée.

3. Procédé selon l'une des revendications 1 ou 2, dans lequel les rouleaux prennent appui, à l'extrémité axiale sur laquelle est agencée la pièce (10) d'aide au montage, sur un rebord formé sur l'élément (2) à surface de roulement.

4. Procédé selon l'une des revendications 1 à 3, dans lequel la pièce d'aide au montage est réalisée de façon à être en contact avec les rouleaux coniques dans la zone de transition entre l'enveloppe des rouleaux coniques et la face frontale des rouleaux coniques et/ou dans lequel la pièce d'aide au montage comprend, dans la zone intérieure en contact avec les rouleaux coniques, un anneau intérieur qui est réalisé en particulier non fermé sur lui-même, et qui est réalisé dans un matériau d'une souplesse nécessaire, par exemple comprenant du caoutchouc, des matières plastiques et similaires, ménageant les surfaces des rouleaux coniques, et qui comprend dans la zone extérieure un anneau extérieur qui est réalisé dans un matériau permettant la résistance mécanique et les forces de maintien nécessaires, par exemple sous la forme d'une bande d'emballage en PET ou similaire.

5. Procédé selon l'une des revendications 1 à 4, dans lequel la cage à segments ou les entretoises de rouleaux sont réalisées en une matière plastique, en particulier en PEEK, et sont renforcées par des fibres, les fibres comprenant en particulier des fibres de verre, des fibres de carbone ou similaires, la cage à segments ou les entretoises de rouleaux sont exemptes d'une configuration qui maintient l'unité de montage en place lorsque l'axe principal de l'élément à surface de roulement est orienté sensiblement verticalement, et/ou dans lequel la cage à segments comprend plusieurs segments de cage répartis dans la direction circonférentielle pour recevoir exactement un rouleau conique ou plusieurs rouleaux coniques, en particulier dans le cas de segments de cage pour exactement un rouleau conique, des rouleaux coniques avec un tel segment de cage et des rouleaux coniques non agencés dans un segment de cage étant agencés en alternance dans la direction circonférentielle, mais chaque rouleau conique pouvant également être pourvu d'un tel segment de cage ou de toute solution mixte à cet égard.

6. Procédé selon l'une des revendications 1 à 5, dans lequel le roulement à rouleaux coniques forme au moins une partie d'un palier d'arbre principal d'une éolienne, en particulier d'une éolienne de l'ordre du mégawatt, le palier d'arbre principal comprend un autre roulement à rouleaux coniques agencé de manière correspondante selon une disposition en O, ou également dans une disposition en X, et/ou le diamètre intérieur du roulement à rouleaux coniques est supérieur à 0,5m, en particulier supérieur à 1m.

7. Unité de montage (1) qui comprend un premier élément (2) à surface de roulement pour des rouleaux coniques (6) d'un roulement à rouleaux coniques, des rouleaux coniques (6) agencés sur l'élément (2) à surface de roulement dans une cage à segments ou entre des entretoises de rouleaux et une pièce (10) d'aide au montage, la cage à segments ou les entretoises de rouleaux étant exemptes d'une configuration qui maintient l'unité de montage en elle-même lorsque l'axe principal de l'élément (2) à surface de roulement est orienté essentiellement verticalement, la pièce d'aide au montage étant réalisée au niveau de la zone d'extrémité de grand diamètre des rouleaux coniques (6), de façon à être en contact avec les rouleaux coniques et en entourant les rouleaux coniques à la manière d'un anneau, de telle sorte que l'unité de montage soit maintenue assemblée jusqu'à un assemblage du roulement à rouleaux coniques, et que, lors de l'assemblage de l'unité de montage (1) avec un deuxième élément (2) à surface de roulement pour les rouleaux coniques (6), celui-ci démonte la pièce (10) d'aide au montage lorsque l'unité de montage (1) est montée du côté frontal.

8. Unité selon la revendication 7, dans laquelle la pièce d'aide au montage est réalisée de façon à être en contact avec les rouleaux coniques dans la zone de transition entre l'enveloppe des rouleaux coniques et la face frontale des rouleaux coniques et/ou dans laquelle la pièce d'aide au montage comprend, dans la zone intérieure en contact avec les rouleaux coniques, un anneau intérieur qui n'est notamment pas réalisé fermé sur lui-même, et qui est réalisé dans un matériau d'une souplesse nécessaire, par exemple comprenant du caoutchouc, des matières plastiques et similaires, ménageant les surfaces des rouleaux coniques, et qui comprend dans la zone extérieure un anneau extérieur qui est réalisé dans un matériau permettant la résistance mécanique et les forces de maintien nécessaires, par exemple sous la forme d'une bande d'emballage en PET ou similaire.

9. Unité selon l'une des revendications 7 ou 8, dans laquelle la cage à segments ou l'entretoise de rouleaux est réalisée en une matière plastique, en particulier en PEEK, et est renforcée par des fibres, les fibres comprenant en particulier des fibres de verre, des fibres de carbone ou similaires, et/ou dans laquelle la cage à segments comprend une pluralité de segments de cage répartis dans la direction circonférentielle et destinés à recevoir exactement un ou plusieurs rouleaux coniques, en particulier, dans le cas de segments de cage, pour exactement un rouleau conique, des rouleaux coniques avec un tel segment de cage et des rouleaux coniques non agencés dans un segment de cage sont agencés en alternance dans la direction circonférentielle, mais chaque rouleau conique est apte à également être pourvu d'un tel segment de cage ou de toute solution mixte à cet égard.

10. Unité selon l'une des revendications 7 à 9, dans laquelle le roulement à rouleaux coniques forme au moins une partie d'un roulement d'arbre principal d'une éolienne, en particulier d'une éolienne de l'ordre du mégawatt, le roulement d'arbre principal comprend un autre roulement à rouleaux coniques agencé de manière correspondante selon une disposition en O, ou également dans une disposition en X, et/ou le diamètre intérieur du roulement à rouleaux coniques est supérieur à 0,5m, en particulier supérieur à 1m.
